(19) Europäisches Patentamt
European Patent Office
Office européen des brevets

(11) **EP 3 298 872 B1**

(12) **EUROPÄISCHE PATENTSCHRIFT**

(45) Veröffentlichungstag und Bekanntmachung des Hinweises auf die Patenterteilung:
**02.12.2020  Patentblatt 2020/49**

(51) Int Cl.:
***A01B 67/00*** *(2006.01)*

(21) Anmeldenummer: **17191336.1**

(22) Anmeldetag: **15.09.2017**

(54) **ANTRIEBSSYSTEM EINES ARBEITSFAHRZEUGS**

DRIVE SYSTEM OF A WORK VEHICLE

SYSTÈME D'ENTRAÎNEMENT D'UN VÉHICULE DE TRAVAIL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.09.2016  DE 102016218595**

(43) Veröffentlichungstag der Anmeldung:
**28.03.2018  Patentblatt 2018/13**

(73) Patentinhaber: **Deere & Company**
**Moline, IL 61265 (US)**

(72) Erfinder:
• **Gresch, Valentin**
**68163 Mannheim (DE)**
• **Fritz Dr., Norbert**
**68163 Mannheim (DE)**
• **Kremmer Dr., Martin**
**68163 Mannheim (DE)**

(74) Vertreter: **Holst, Sönke**
**John Deere GmbH & Co. KG**
**Mannheim Regional Center**
**Global Intellectual Property Services**
**John-Deere-Strasse 70**
**68163 Mannheim (DE)**

(56) Entgegenhaltungen:
**EP-A1- 1 609 349        EP-A1- 2 759 194**
**EP-A1- 2 803 256        EP-A2- 1 153 538**
**DE-A1-102005 029 405**

**Beschreibung**

Die Erfindung betrifft ein Antriebssystem eines Arbeitsfahrzeugs, mit:

einem Antriebsmotor,
einem vom Antriebsmotor antreibbaren Last-Antriebsstrang zum Antrieb einer Last mit einer zeitlich variablen, zu einer Drehzahländerung des Antriebsmotors führenden Leistungsabnahme,
einen vom Antriebsmotor antreibbaren Vortriebs-Antriebsstrang zum Antrieb von Vortriebsmitteln des Arbeitsfahrzeugs, der eine mittels eines Aktors veränderbare Übersetzung aufweist,
und einer Steuerung, die mit dem Aktor verbunden, mit einem Signal hinsichtlich der Leistungsaufnahme der Last beaufschlagbar und betreibbar ist, eine von dem Signal abhängige Stellgröße zu erzeugen, sowie ein entsprechendes Arbeitsfahrzeug.

Stand der Technik

Landwirtschaftliche Arbeitsfahrzeuge umfassen üblicherweise Antriebssysteme mit Antriebsmotoren, die nicht nur zum Vortrieb des Arbeitsfahrzeugs dienen, sondern auch eine Last antreiben. Eine derartige Last kann insbesondere eine Einrichtung zur Aufnahme und Bearbeitung von Erntegut sein. Diese Last kann vom eigentlichen Arbeitsfahrzeug trennbar sein und durch eine Zapfwelle vom Antriebsmotor des Arbeitsmotors angetrieben werden, wie beim Beispiel einer Ballenpresse, die von einem Ackerschlepper gezogen wird, oder sie befindet sich an Bord des Arbeitsfahrzeugs, wie eine Dresch- und Trenneinrichtung eines Mähdreschers oder eine Häckseltrommel eines Feldhäckslers. Die Last wird vom Antriebsmotor über einen Last-Antriebsstrang angetrieben, der (nur) mechanische oder (auch) hydraulische oder elektrische Kraftübertragungselemente enthält. Analog erfolgt der Vortrieb des Arbeitsfahrzeugs durch den Antriebsmotor über einen Vortriebs-Antriebsstrang, der ebenfalls (nur) mechanische oder (auch) hydraulische oder elektrische Kraftübertragungselemente enthält. Der Antriebsmotor des Arbeitsfahrzeugs kann ein Verbrennungsmotor oder ein Elektromotor sein.

Der Betrieb des Arbeitsfahrzeugs bringt es mit sich, dass die Leistungsabnahme der Last nicht in allen Fällen konstant ist. So kann sich der Erntegutdurchsatz in einem Mähdrescher oder Feldhäcksler bei variierender Bestandsdichte mehr oder weniger schnell ändern, was zu variierenden Leistungsabnahmen der Last am Antriebsmotor führt. Manche Lasten erfordern aufgrund ihres mechanischen Aufbaus zeitlich variable Antriebsleistungen, wie beispielsweise Rechteckballenpressen, bei denen ein Stopfer periodisch in eine Presskammer gedrückt wird, um das zu pressende Erntegut zu einem rechteckigen Ballen zusammen zu drücken. Die sich zeitlich ändernden Leistungsabnahmen der Last bedingen über den Last-Antriebsstrang Drehzahländerungen des Antriebsmotors, welche über den Vortriebs-Antriebsstrang auch zu sich ändernden Vortriebsgeschwindigkeiten des Arbeitsfahrzeugs führen.

Derartige Änderungen der Vortriebsgeschwindigkeit des Arbeitsfahrzeugs sind unerwünscht, da sie den Bediener des Arbeitsfahrzeugs Beschleunigungen nach vorn und hinten aussetzen. Auch werden die Komponenten des Vortriebs-Antriebsstrangs, die Reifen des Arbeitsfahrzeugs und die Kopplungselemente zwischen dem Arbeitsfahrzeug und einer davon gezogenen Last durch die ständigen Geschwindigkeitsänderungen stark belastet und verschleißen schnell. Zudem erschweren die Geschwindigkeitsänderungen die Kontrolle eines Überladeprozesses von einer Erntemaschine auf ein das Erntegut übernehmendes Transportfahrzeug.

In der als gattungsbildend angesehenen EP 1 609 349 A1 wurde vorgeschlagen, die Drehzahl des Antriebsmotors einer selbstfahrenden Erntemaschine vorausschauend abhängig von der jeweils aufzubringenden Leistungsaufnahme der Last anzusteuern. Die Vortriebsgeschwindigkeit wird über ein hydraulisches und somit verstellbares Getriebe des Vortriebs-Antriebsstranges konstant gehalten und auch die Drehgeschwindigkeit der Last (z.B. Häckseltrommel) kann über ein verstellbares Getriebe des Last-Antriebsstranges konstant gehalten werden.

In der EP 1 658 765 A1 wird eine selbstfahrende Erntemaschine beschrieben, bei welcher ebenfalls die Drehzahl des Antriebsmotors vorausschauend abhängig von der jeweils aufzubringenden Leistungsaufnahme der Last angesteuert wird, um ein Abwürgen des Antriebsmotors bei stark ansteigenden Durchsätzen zu vermeiden. Die Vortriebsgeschwindigkeit der Erntemaschine wird durch den Fahrer vorgegeben und bleibt konstant.

Die EP 2 183 955 A1 schlägt vor, bei einer Kombination aus einem Ackerschlepper und einer Rechteckballenpresse die sich zyklisch ändernde Leistungsabnahme der Last zu erfassen, die durch den sich hin- und her bewegenden Stopfer der Ballenpresse bedingt ist. Zusätzlich wird der Erntegutdurchsatz vorausschauend erfasst und seine Auswirkung auf die Leistungsabnahme der Last gelernt. Anhand der bei einem jeweiligen Erntegutdurchsatz zu erwartenden Leistungsabnahme der Last wird der Antriebsmotor des Ackerschleppers vorausschauend derart angesteuert, dass seine Drehzahl konstant bleibt. Dadurch soll auch die Vortriebsgeschwindigkeit des Ackerschleppers weniger als bisher variieren.

Aufgabe

Laständerungen an einem Nebenantrieb wie z.B. der Zapfwelle eines Traktors, an der Hydraulik oder elektrischen Leistungsabnehmern eines mobilen Arbeitsfahrzeugs führen zu einer Schwankung der Antriebsmotordrehzahl, insbesondere wenn die Leistungsgrenze des Dieselmotors erreicht oder überschritten wird oder wenn zur Einhaltung von Abgasnormen die Kraftstoffeinspritzmenge in transienten Betriebszuständen limitiert wird. Schwankungen der Antriebsmotordrehzahl führen bei konstanter Übersetzung des Vortriebs-Antriebsstrangs zu Schwankungen der Fahrzeuglängsbeschleunigung und (insbesondere bei gefederten Systemen) zu Nickbewegungen der Arbeitsmaschine. Auch können zyklisch angreifende, mechanische Lasten (z.B. Zugkräfte) an der Arbeitsmaschine zu Längsbeschleunigung und Nickbewegungen führen.

Die im Stand der Technik nach EP 1 609 349 A1, EP 1 658 765 A1 und EP 2 183 955 A1 vorgesehenen, auf einer vorausschauenden Erfassung der zu erwartenden Leistungsabnahme der Last basierenden Drehzahlregelungen des Antriebsmotors erweisen sich zumindest bei den durch Rechteckballenpressen von einem Ackerschlepper abgeforderten Leistungsänderungen insofern als problematisch, als dass aktuelle Verbrennungsmotoren kaum in der Lage sind, den geforderten Leistungsänderungen, die im Bereich von 100 kW liegen können, rechtzeitig und vollständig zu folgen. Die Drehzahländerungen des Antriebsmotors lassen sich somit nicht vollständig ausregeln. Die somit dennoch verbleibenden Drehzahländerungen des Antriebsmotors führen zu Änderungen in der gemäß EP 2 183 955 A1 nicht nachgeregelten Vortriebsgeschwindigkeit des Ackerschleppers und über die variierende Eingangsdrehzahl der hydrostatischen Getriebe der Vortriebs-Antriebsstränge nach EP 1 609 349 A1 und EP 1 658 765 A1 auch dort zu Fahrgeschwindigkeitsänderungen, die allenfalls durch eine die tatsächliche Vortriebsgeschwindigkeit erfassende Geschwindigkeitsregelung ausgeglichen werden könnten, die jedoch erst verzögert ansprechen würde und somit die Geschwindigkeit nicht unbedingt konstant halten kann. Auch wären Regelinstabilitäten zu befürchten.

Das der Erfindung zu Grunde liegende Problem wird darin gesehen, ein verbessertes Antriebssystem eines Arbeitsfahrzeugs bereitzustellen, das die genannten Nachteile nicht oder in einem verminderten Maße aufweist.

Lösung

Dieses Problem wird erfindungsgemäß durch die Lehre der Patentansprüche 1 und 5 gelöst, wobei in den weiteren Patentansprüchen Merkmale aufgeführt sind, die die Lösung in vorteilhafter Weise weiterentwickeln.

Ein Antriebssystem eines Arbeitsfahrzeugs umfasst einen Antriebsmotor, einen vom Antriebsmotor antreibbaren Last-Antriebsstrang zum Antrieb einer Last mit einer zeitlich variablen, zu einer Drehzahländerung des Antriebsmotors führenden Leistungsabnahme, einen vom Antriebsmotor antreibbaren Vortriebs-Antriebsstrang zum Antrieb von Vortriebsmitteln des Arbeitsfahrzeugs, der eine mittels eines Aktors veränderbare Übersetzung aufweist, und eine Steuerung, die mit dem Aktor verbunden, mit einem Signal hinsichtlich der Leistungsaufnahme der Last beaufschlagbar und betreibbar ist, eine von dem Signal abhängige Stellgröße zu erzeugen. Die Steuerung ist betreibbar, die dem Aktor zugeführte Stellgröße basierend auf dem Signal derart zu erzeugen, dass die Vortriebsgeschwindigkeit des Arbeitsfahrzeugs auch bei einer Änderung der Leistungsaufnahme der Last zumindest näherungsweise konstant bleibt und/oder eine durch eine Änderung der Leistungsaufnahme der Last bedingte Nickbewegung des Arbeitsfahrzeugs minimiert wird.

Mit anderen Worten liegen der Steuerung Signale vor, die Informationen hinsichtlich der Leistungsaufnahme der Last enthalten. Hierbei kann sich die Information auf die absolute Leistungsaufnahme der Last oder eine Änderung der Leistungsaufnahme der Last beziehen. Die Steuerung kann somit abschätzen, welche Auswirkung eine Änderung der Leistungsaufnahme der Last auf die Drehzahl des Antriebsmotors hat, bei dem es sich um einen Verbrennungs- oder Elektromotor handeln kann, und welche Auswirkung diese Drehzahländerung auf die Vortriebsgeschwindigkeit des Arbeitsfahrzeug haben wird. Das Übersetzungsverhältnis des Vortriebs-Antriebsstrangs wird durch den von der Steuerung kontrollierten Aktor derart angepasst, dass sich auch dann, wenn sich die Leistungsaufnahme der Last ändern sollte, letztendlich (durch die Kompensation der Auswirkung der erwarteten Drehzahländerung auf die Vortriebsgeschwindigkeit) eine zumindest etwa konstante Vortriebsgeschwindigkeit des Arbeitsfahrzeugs ergibt. Sollte die Leistungsabnahme der Last ansteigen, wird die Steuerung den Aktor somit veranlassen, die Übersetzung des Vortriebs-Antriebsstranges im Sinne einer größeren Übersetzung (schnellere Fahrt) des Arbeitsfahrzeugs anzusteuern und analog die Übersetzung vermindern, wenn die Leistungsabnahme der Last absinkt.

Alternativ oder zusätzlich kommandiert die Steuerung den Aktor derart, dass eine durch eine Änderung der Leistungsaufnahme der Last bedingte Nickbewegung des Arbeitsfahrzeugs minimiert wird. Eine Änderung der Leistungsaufnahme der Last führt, wie beschrieben, zu einer Änderung der Drehzahl des Antriebsmotors, die sich wiederum auf die Vortriebsgeschwindigkeit des Arbeitsfahrzeugs auswirkt. Wird die Leistungsaufnahme der Last größer, bremst das Arbeitsfahrzeug und wird die Leistungsaufnahme der Last kleiner, beschleunigt es. Diese Geschwindigkeitsänderung führt aufgrund von Elastizitäten der Bodeneingriffsmittel des Arbeitsfahrzeugs (Reifen und/oder ggf. Federungen von Rädern oder Raupenlaufwerken) zu Nickbewegungen, d.h. das Arbeitsfahrzeug neigt sich nach vorn, wenn die Leistungsaufnahme der Last zunimmt und nach hinten, wenn die Leistungsaufnahme der Last absinkt. Diese Nickbewegungen können gemäß der Lehre der vorliegenden Erfindung durch die Verstellung des Übersetzungsverhältnisses des Vortriebs-Antriebsstranges vermindert oder völlig vermieden werden. Sollte demnach die Leistungsaufnahme der Last ansteigen, was ohne Kompensation zu der erwähnten Nickbewegung des Arbeitsfahrzeugs nach vorn führen würde, wird die Steuerung den Aktor im Sinne einer Beschleunigung des Arbeitsfahrzeugs kommandieren, um die Nickbewegung zu vermeiden. Analog wird die Steuerung den Aktor im Sinne einer Verlangsamung des Arbeitsfahrzeugs kommandieren, wenn die Leistungsaufnahme der Last absinken sollte, um die Nickbewegung zu kompensieren.

Es handelt sich bei der vorliegenden Geschwindigkeitssteuerung des Arbeitsfahrzeugs um ein System mit offener Schleife, dem als Eingangsgröße das Signal hinsichtlich der Leistungsaufnahme der Last zugeführt wird. Auf diese Weise kann man mit vergleichsweise geringem Aufwand und ohne Regelinstabilitäten eine zumindest annähernd komplette Auslöschung der Auswirkung der durch Änderungen der Leistungsabnahme der Last bedingten Antriebsmotordrehzahländerung auf die Vortriebsgeschwindigkeit und/oder Orientierung des Arbeitsfahrzeugs erreichen.

Erfindungsgemäß ist die Steuerung betreibbar, aus dem Signal auf eine erwartete Leistungsaufnahme der Last zu schließen. Bei einer möglichen Ausführungsform kann das Signal auf die Menge stromauf einer Erntemaschine liegenden Erntegutes hinweisen und die Steuerung kann anhand des Signals auf die Leistungsaufnahme der Last an einem in der Zukunft liegenden Zeitpunkt schließen und somit vorausschauend die Übersetzung des Vortriebs-Antriebsstranges anpassen. Bei einer anderen, möglichen Ausführungsform kann das Signal direkt oder indirekt von der Position der Last in Form eines Stopfers einer Rechteckballenpresse abhängen und beispielsweise im Antriebsstrang der Last angeordnet sein. Anhand der Leistungsaufnahme, die sich periodisch ändert, kann die Steuerung schließen, wie die Leistungsaufnahme in näherer Zukunft aussehen wird und somit vorausschauend die Übersetzung des Vortriebs-Antriebsstranges anpassen.

Die Steuerung berechnet die Stellgröße anhand der Änderung der Drehzahl des Antriebsmotors, die bei der erwarteten Leistungsaufnahme der Last zu erwarten ist. Es wird demnach durch die Steuerung die Leistungsaufnahme der Last sensorisch erfasst oder auf eine beliebige Art berechnet. Anhand der Leistungsaufnahme der Last wird die Drehzahländerung berechnet, und darauf basierend die vorzugebende Stellung des Aktors zur Verstellung des Vortriebs-Antriebsstranges ermittelt. Diese Vorgehensweise kann auch vereinfacht werden, indem die Steuerung anhand fest abgespeicherter oder gelernter Zusammenhänge das Signal hinsichtlich der Leistungsaufnahme der Last direkt in ein geeignetes Stellsignal für den Aktor umrechnet.

Die Steuerung kann das Signal hinsichtlich der Leistungsabnahme der Last (d.h. wie oben erwähnt, die absolute Leistungsabnahme oder eine Änderung der Leistungsabnahme der Last) anhand von Betriebsdaten des Antriebsmotors berechnen. Es wird somit aus Betriebsdaten des Antriebsmotors, wie Drehzahl und/oder Drehmoment und/oder Leistung, die von einer Motorsteuerung verfügbar sind, abgeleitet oder abgeschätzt, welche Leistung durch die Last abgenommen wird. Der Antriebsmotor versorgt zwar auch den Vortriebs-Antriebsstrang und ggf. andere Einrichtungen des Arbeitsfahrzeugs, wie Klimaanlage, Beleuchtung etc. mit Leistung, doch besteht die Möglichkeit, Änderungen der Leistungsaufnahme der Last anhand des zeitlichen Verlaufs der abgenommenen Gesamtleistung abzuschätzen, denn mit bestimmten Frequenzen variierende Leistungsabnahmen sind üblicherweise der (veränderlichen) Last zuzuordnen. Analog kann das Signal hinsichtlich der Leistungsabnahme der Last durch einen Sensor zur Erfassung der im Last-Antriebsstrang abgenommenen Leistung erfasst werden. Hierbei kann die totale Leistungsabnahme der gesamten Last z.B. in einer Zapfwelle des Arbeitsfahrzeugs oder nur die Leistungsaufnahme eines relevanten, für die Leistungsaufnahme größtenteils verantwortlichen Teils der Last erfasst werden. So kann bei einer Rechteckballenpresse die Leistungsabnahme anhand eines Sensors erfolgen, der die auf den Stopfer wirkende Last erfasst (vgl. US 7 174 831 B2). Es besteht auch die Möglichkeit, die Leistungsabnahme der Last von einer Kontrolleinheit der Last abzufragen, denn die Kontrolleinheit steuert angetriebene Elemente der Last und ist darüber informiert, welche Leistung gerade und in näherer Zukunft benötigt wird. Auch könnte die Steuerung zwecks Erfassung der Leistungsabnahme der Last mit einem Sensor zur Erfassung einer durch die Leistungsabnahme der Last beeinflussten Größe verbunden sein. Ein derartiger Sensor kann beispielsweise die Beschleunigung des Arbeitsfahrzeugs in Vorwärtsrichtung oder Nickbewegungen des Arbeitsfahrzeugs erfassen. Man macht sich dabei zu Nutze, dass die Änderung der Leistungsabnahme der Last die Drehzahl des Antriebsmotors des Arbeitsfahrzeugs verändert, die sich über den Vortriebs-Antriebsstrang auf das Arbeitsfahrzeug auswirkt und es beschleunigt oder verzögert und ggf. zu einer Nickbewegung nach vorn oder hinten führt. Diese Beschleunigung oder Bewegung kann erfasst und zur Abschätzung der von der Last abgenommenen Leistung herangezogen werden.

Weiterhin kann die Steuerung das Signal über eine Zeitspanne erfassen und anhand dessen zeitlichen Verlaufs auf die zukünftige Leistungsaufnahme der Last und bei zyklisch die Leistungsabnahme verändernden Lasten, wie Rechteckballenpressen, deren Periodizität schließen.

Schließlich wird vorgeschlagen, dass die Steuerung betreibbar ist, einen basierend auf Beschleunigungs- und Drehratenmessungen berechneten Komfortfaktor zu optimieren. Die Steuerung erfasst demnach sensorisch Größen, die den Komfort des Bedieners der Arbeitsmaschine an seinem Arbeitsplatz beeinflussen, wie die Beschleunigung nach vorn und hinten und die Drehrate um die Nickachse, und berechnet daraus einen Komfortfaktor, der diese Größen repräsentiert. Die Steuerung kommandiert den Aktor im Sinne einer Optimierung des Komfortfaktors. Hierbei kann auf die oben und die im folgenden Ausführungsbeispiel beschriebenen Vorgehensweisen zurückgegriffen werden.

Ausführungsbeispiel

In der Zeichnung ist ein nachfolgend näher beschriebenes Ausführungsbeispiel der Erfindung dargestellt. Es zeigt:

Fig. 1 eine seitliche Ansicht eines Arbeitsfahrzeugs in Form eines Ackerschleppers mit einer angehängten Last in Form einer Rechteckballenpresse,

Fig. 2 ein Schema des Antriebssystems des Arbeitsfahrzeugs, und

Fig. 3 ein Flussdiagramm, nach dem die Steuerung des Antriebssystems arbeitet.

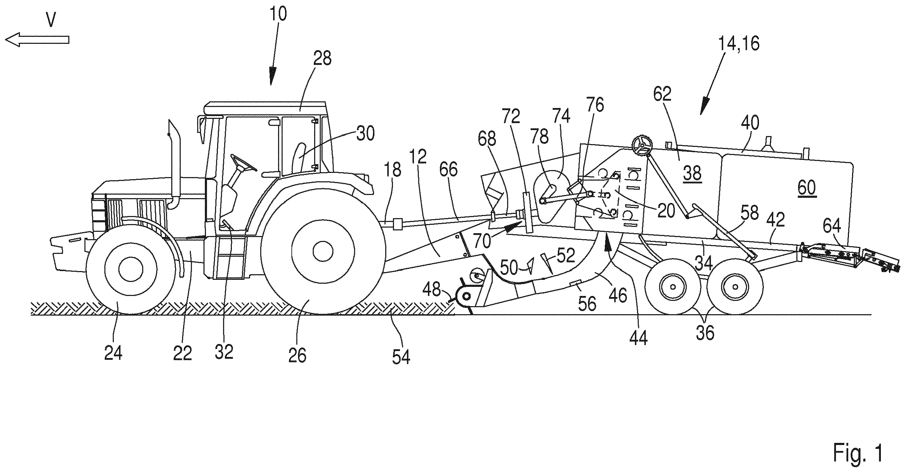

Die Figur 1 zeigt ein landwirtschaftliches Arbeitsfahrzeug 10 in Form eines Ackerschleppers, der über eine Deichsel 12 eine Last 14 in Form einer Rechteckballenpresse 16 zieht. Eine Zapfwelle 18 dient zum Antrieb beweglicher Elemente der Last 14 und insbesondere eines Stopfers 20. Das Arbeitsfahrzeug 10 baut sich auf einem Fahrgestell 22 auf, das sich auf lenkbaren Vorderrädern 24 und antreibbaren Hinterrädern 26 abstützt und eine Kabine 28 trägt, in der sich ein Bedienerarbeitsplatz 30 befindet. Mittels einer Eingabeeinrichtung 32 in Form eines Pedals oder eines Fahrhebels, der ohne dauerhafte Bedienerinteraktion eine Sollgeschwindigkeit vorgeben kann, kann in einer manuellen Betriebsart die Vortriebsgeschwindigkeit des Arbeitsfahrzeugs 10 durch einen Bediener vorgegeben werden.

Die Rechteckballenpresse 16 dient zum Herstellen quaderförmiger Ballen. Die Rechteckballenpresse 16 weist einen Rahmen 34 auf, der auf Bodenstützrädern 36 in Tandemanordnung abgestützt ist. An den Rahmen 34 ist die Deichsel 12 angeschlossen, welche sich von diesem aus nach vorn erstreckt und so ausgebildet ist, dass sie an das Arbeitsfahrzeug 10 angeschlossen werden kann, der mit der Zapfwelle 18 ausgerüstet ist, um Leistung zum Antreiben verschiedener angetriebener Komponenten der Rechteckballenpresse 16 bereitzustellen. Ein Pressraum 38 in Form einer Kammer von rechteckförmigem Querschnitt wird teilweise von einem Gehäuseoberteil 40 und einem Gehäuseunterteil 42 gebildet, wobei der Gehäuseunterteil 40 mit einem Guteinlass 44 versehen ist, an den ein gekrümmter Zufuhrkanal 46 angeschlossen ist. Die Seitenwände des Pressraums 38 und/oder das Gehäuseoberteil 40 können starr angebracht oder durch nicht gezeigte Aktoren verstellbar sein, so dass der Querschnitt des Pressraums 38 veränderbar ist. Über die Einstellung der Aktoren lässt sich der seitliche Anpressdruck auf den Ballenteil 62 und somit die Pressdichte variieren.

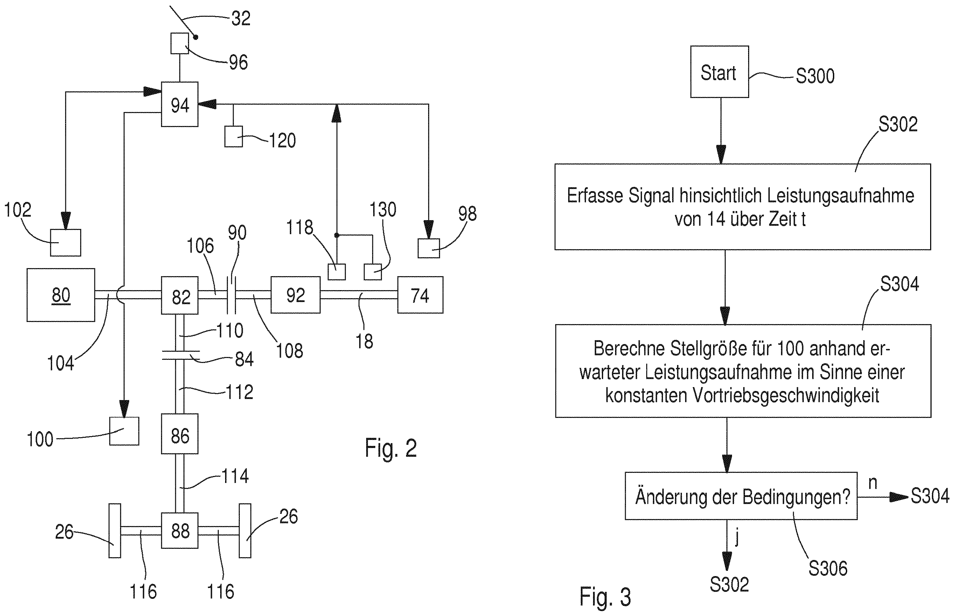

Eine Zufuhreinrichtung weist eine Erntegutaufnahmevorrichtung 48 in Form eines Aufnehmers mit einem zugeordneten Niederhalter, eine Verdichtergabel 50 und eine Ladegabel 52 auf. Die Erntegutaufnahmevorrichtung 48 umfasst eine zur Mitte fördernden Schnecke und ist vor dem Zufuhrkanal 46 angeordnet, um ein Schwad 54 von Erntegut vom Boden aufzuheben und es an die Verdichtergabel 50 abzugeben, die dazu dient, Erntegut in dem Zufuhrkanal 46 zu verdichten, bis sich eine Ladung von vorgewählter Dichte in dem Zufuhrkanal 46 angesammelt hat und mittels der Ladegabel 52 über den Guteinlass 44 in den Pressraum 38 hineingestopft wird. An einer vorderen unteren Stelle des Zufuhrkanals 46 ist eine federbelastete Klappe 56 schwenkbar montiert, die in Abhängigkeit der Dichte des in dem Zufuhrkanal 46 befindlichen Erntegutes schwenkt und anzeigt, sobald eine gewünschte Pressgutdichte in dem Zufuhrkanal 46 erreicht ist, um über eine Kontrolleinheit 98 (vgl. Figur 2) die Bestromung eines elektrischen Steuerkreislaufs zu bewirken, der eine entsprechende Antriebsverbindung herstellt, die die Ladegabel 52 aktiviert, so dass sie die Ladung des Ernteguts in den Pressraum 38 bewegt. Im Folgenden beziehen sich Richtungsangaben, wie vorn, hinten stets auf die Vorwärtsrichtung V des Arbeitsfahrzeugs 10 und der Rechteckballenpresse 16, die in der Figur 1 von rechts nach links verläuft.

Wenn die Ladung des Ernteguts in den Pressraum 38 eingebracht wurde, wird der Stopfer 20 mittels eines geeigneten Antriebs in einer gesteuerten Reihenfolge zeitlich nach der Ladegabel 52 betätigt, um das Erntegut nach hinten in den Pressraum 38 zu bewegen, wo es in einem Stapel verdichtet wird. Nachdem der Stapel von verdichtetem Material eine vorgewählte Länge erreicht hat, wird ein Nadelzusammenbau 58 zum Liefern von Bindegarn, der mehrere gekrümmte Nadeln enthält, betätigt, um mehrere Garnstränge einer entsprechenden Anzahl nicht gezeigter Knoter zuzuführen, die so wirken, dass sie Garnlängen um die vorgewählte Länge der Stapel legen, um einen Ballen 60 zu bilden, der zum Entladen fertig ist, was dann geschieht, wenn er von einem noch nicht fertigen Ballenteil 62 aus dem rückwärtigen Endbereich des Pressraums 38 herausgedrückt wird, wenn er in seiner Länge zunimmt, weil neue Ladungen von Erntegut in den Pressraum 38 gestopft werden.

Der Stopfer 20 ist für eine hin- und hergehende Bewegung in dem Pressraum 38 zwischen einer zurückgezogenen Stellung vor dem Guteinlass 44 und einer (in Figur 1 gezeigten) teilwiese ausgefahrenen Stellung über dem Guteinlass 44 ausgelegt, aus der er sich noch weiter nach hinten bewegen kann, bis er gegen einen Ballenteil 62 stößt. Diese Bewegung des Stopfers 20 hat zum Ergebnis, dass Ladungen von Erntegut, die aus dem Zufuhrkanal 46 in den Pressraum 38 eingeführt werden, gegen einen Stapel von Erntegut verdichtet werden, was den teilweise gebildeten Ballenteil 62 und/oder den kompletten Ballen 60 einschließt. Zum schonenden Ablegen des Ballens 60 auf dem Erdboden ist am hinteren Ende des Rahmens 34 als rückwärtige Verlängerung des Gehäuseunterteils 42 eine Ablagevorrichtung 64 angebracht.

Der Antrieb des Stopfers 20 erfolgt über die Zapfwelle 18 des Arbeitsfahrzeugs 10, die über eine Gelenkwelle 66 eine Eingangswelle 68 der Antriebseinrichtung 70 des Stopfers 20 antreibt. Die Eingangswelle 68 treibt ein Schwungrad 72 und über ein Getriebe 74 eine Kurbel 78 an, deren Bewegung über eine Pleuelstange 76 auf den Stopfer 20 übertragen wird.

Die Figur 2 zeigt ein Schema des Antriebssystems des Arbeitsfahrzeugs 10 und der Last 14. Ein Antriebsmotor 80 des Arbeitsfahrzeugs 10, der als Verbrennungs- (Diesel-) Motor oder als Elektromotor ausgeführt sein kann, treibt mit seiner Ausgangswelle 104 ein Verteilergetriebe 82 an, das eine erste Vortriebsausgangswelle 110 und eine Lastausgangswelle 106 hat. Bei einer der Wellen 110 oder 106 kann das Verteilergetriebe 82 eine direkte Verbindung zur Ausgangswelle 104 beinhalten. Die Vortriebsausgangswelle 110 treibt über eine Fahrkupplung 84 eine Getriebeeingangswelle 112 an, die ein (z.B. als Lastschaltgetriebe oder stufenlos verstellbares Getriebe ausgeführtes) Vortriebsgetriebe 86 mit veränderbarer Übersetzung antreibt, das ausgangsseitig über eine Welle 114, ein Differentialgetriebe 88 und Radantriebswellen 116 die hinteren Räder 26 antreibt. Optional kann das Vortriebsgetriebe 86 auch die Vorderräder 24 über nicht gezeigte Antriebsmittel antreiben. Die Lastausgangswelle 106 steht über eine Zapfwellenkupplung 90 und ein Zapfwellengetriebe 92 mit der Zapfwelle 18 in Antriebsverbindung, die zum Antrieb der des Getriebes 74 der Antriebseinrichtung 70 und weiterer angetriebener Elemente der Last 14 dient.

Das Verteilergetriebe 82, die Vortriebsausgangswelle 110, die Kupplung 84, das Vortriebsgetriebe 86, die Welle 114, das Differentialgetriebe 88 und die Radantriebswellen 116 bilden einen vom Antriebsmotor 80 antreibbaren Vortriebs-Antriebsstrang zum Antrieb von Vortriebsmitteln (Räder 26) des Arbeitsfahrzeugs 10, der eine mittels des Aktors 100 veränderbare Übersetzung aufweist. Das Verteilergetriebe 82, die Lastausgangswelle 106, die Kupplung 90, das Zapfwellengetriebe 92, die Zapfwelle 18 und das Getriebe 74 (mit den nachfolgenden Komponenten zum Antrieb des Stopfers 20) bilden einen vom Antriebsmotor 80 antreibbaren Last-Antriebsstrang zum Antrieb der Last 14, die, wie im Folgenden beschrieben, eine zeitlich variable, zu einer Drehzahländerung des Antriebsmotors 80 führenden Leistungsabnahme bedingt.

Eine elektronische Steuerung 94 ist mit einer Kontrolleinheit 98 der Last 14 (Rundballenpresse 16), einem Aktor 100 zur Verstellung des Übersetzungsverhältnisses des Vortriebsgetriebes 86, einer Motorsteuerung 102, einem Geschwindigkeitsvorgabesensor 96 zur Erfassung der Stellung der Eingabeeinrichtung 32 und aus Gründen der Übersichtlichkeit nicht eingezeichneten Aktoren zum Schließen und Öffnen der Kupplungen 84 und 90 verbunden, obwohl letztere auch durch den Bediener per Hand oder Fuß betätigt werden könnten.

Der Stopfer 20 der Last 14 wird, wie oben beschrieben, periodisch in den Pressraum 38 gefahren und drückt gegen den Ballenteil 62, mit einer in einer Größenordnung von 1 Hz liegenden Frequenz. Da hierfür eine relativ hohe Leistung erforderlich ist, pflanzt sich diese Belastung über den Last-Antriebsstrang bis zum Antriebsmotor 80 fort, der mit Drehzahländerungen reagiert. Diese Drehzahländerungen führen über den Vortriebs-Antriebsstrang auch zu Vortriebsgeschwindigkeitsänderungen des Arbeitsfahrzeugs 10, die sich für den Bediener nachteilig bemerkbar machen. Zudem bewirkt die Bewegung der Masse des Stopfers 20 durch Inertialkräfte auch eine periodische Beschleunigung und Verzögerung der ganzen Rechteckballenpresse 16, die sich auf das Arbeitsfahrzeug 10 fortpflanzt. In beiden Fällen erfährt der Fahrer des Arbeitsfahrzeugs 10 diesen Effekt sowohl akustisch als auch in Form von Längsbeschleunigungen und durch die Elastizität der Reifen der Räder 24, 26 und ggf. eine Vorderachsfederung bedingte Nickbewegungen des Arbeitsfahrzeugs 10 am Bedienerarbeitsplatz 30.

Es gibt zwar aus Gründen der Fahrsicherheit und des Fahrkomforts eine Reihe von Federungssystemen, die auf das Arbeitsfahrzeug 10 bzw. auf den Fahrer einwirkende Schwingungsbelastungen reduzieren sollen. Die meisten dieser Federungssysteme wirken passiv- oder semi-aktiv und tilgen die Vertikaldynamik des Fahrers. Es gibt aber auch aktive Systeme und Federungssysteme, die auf andere Freiheitsgrade wie Nicken, Rollen oder Gieren einwirken bzw. die Quer- und Längsdynamik adressieren. Derartige Systeme sind jedoch relativ aufwändig und können die Bewegung nicht ganz auslöschen.

Die Lebensdauer des Arbeitsfahrzeugs 10 und ihrer Komponenten ist bei zyklischen Lastspitzen der Längsdynamik in Mitleidenschaft gezogen. Die Anhängerzugöse zur Anbringung der Deichsel 12 am Fahrgestell 22 geht bei spielbehafteten Verbindungseinrichtungen durch solche zyklischen Lasten oft von Endlage zu Endlage. In Folge dessen steigt die Amplitude der zyklischen Kraft jedes Mal signifikant an, was sich sowohl auf den Verschleiß und die Dauerfestigkeit der Verbindungseinrichtung, als auch auf den Komfort des Fahrers auswirkt. Dieser Effekt gilt selbstverständlich auch für alle anderen zyklisch beanspruchten Bauteile im kompletten Vortriebs-Antriebsstrang inklusive der Reifen. Aus Sicht des Fahrers und des Arbeitsfahrzeugs 10 und der Last 14 ist es somit von hohem Interesse, die Amplituden der Längsdynamik und die Nickbewegungen zu reduzieren, insbesondere bei zyklisch wiederkehrenden Lasten. Es ist somit wünschenswert, dass das Arbeitsfahrzeug 10 eine regelmäßig wiederkehrende äußere Last - verursacht durch Inertialkräfte oder durch das induzierte Drehmoment - automatisch erkennen und resultierende periodische Längsbeschleunigungen und/oder Nickbewegungen zumindest teilweise beseitigen kann.

Die Figur 3 zeigt ein Flussdiagramm, nach dem die Steuerung 94 im Betrieb vorgeht. Nach dem Start im Schritt S300 und Auswahl einer Automatikbetriebsart durch den Bediener mittels einer entsprechenden Eingabe in eine nicht gezeigte Bedienerschnittstelle wird das Arbeitsfahrzeug 10 im Schritt S302 mit der Last 14 (Rechteckballenpresse 16) über ein Feld gefahren und dabei Erntegut aufgenommen und zu Ballen 60 gepresst. Die Vortriebsgeschwindigkeit des Arbeitsfahrzeugs 10 wird dabei zunächst durch die Eingabeeinrichtung 32 vorgegeben, deren Stellung durch den Geschwindigkeitsvorgabesensor 96 erfasst und der Steuerung 94 zugeführt wird. Die Steuerung 94 kommandiert die Motorsteuerung 102 und den Aktor 100 in an sich bekannter Weise, d.h. die Drehzahl des Antriebsmotors 80 wird auf einen Wert gebracht, der zu einer geeigneten Drehzahl der Zapfwelle 18 führt und der Aktor 100 wird in eine Stellung gebracht, bei der die gewünschte Vortriebsgeschwindigkeit erzielt wird. Sollte das Zapfwellengetriebe 92 eine mittels eines Aktors veränderbare Übersetzung aufweisen, kann die Steuerung 94 auch den zugehörigen Aktor des Zapfwellengetriebes 92 kontrollieren, was einen weiteren Freiheitsgrad ermöglicht, um die Drehzahl des Antriebsmotors 80 auf einen verbrauchsgünstigen Wert zu stellen.

Die Leistungsaufnahme der Last 14 kann im Schritt S302 anhand eines Drehmomentsensors 118 erfasst werden, der das von der Zapfwelle 18 übertragene Drehmoment erfasst. Es wäre auch denkbar, die (auf die abgenommene Leistung hinweisende) Drehzahl des Antriebsmotors 80 zu erfassen, die der Steuerung 94 durch die Motorsteuerung 102 übermittelt werden kann. Es können auch beide Vorgehensweisen kombiniert oder auf eine andere im Stand der Technik bekannte Methode zur Ermittlung der Last des Antriebsmotors 80 zurückgegriffen werden. Die Steuerung 94 zeichnet während des Schritts S302 das gemessene Drehmoment über die Zeit für eine Zeitspanne t auf, die in der Größenordnung von 10 Sekunden liegen kann. Der Aufzeichnungszeitraum wird derart gewählt, dass mehrere Perioden der Lastschwankungen enthalten sind.

Anhand dieser Aufzeichnung ist die Steuerung 94 anschließend im Schritt S304 in der Lage, abzuschätzen, welche Leistung die Last 14 in der Zukunft in Abhängigkeit von der Zeit abnehmen wird. Hierzu sei auf die Offenbarung der EP 2 183 955 A1 verwiesen, die durch Verweis mit in die vorliegenden Unterlagen aufgenommen wird, wobei der Einfluss der aufgenommenen Erntegutmengen in die Rechteckballenpresse 16 berücksichtigt oder nicht berücksichtigt werden kann. Um die unerwünschten Längsbeschleunigungen und/oder Nickbewegungen des Arbeitsfahrzeugs 10 zu reduzieren oder ganz zu vermeiden, kontrolliert die Steuerung 94 den Aktor 100 im Schritt S304 derart, dass das Übersetzungsverhältnis des Vortriebsgetriebes 86 derart verstellt wird, dass die laständerungsbedingten Längsbeschleunigungen und/oder Nickbewegungen des Arbeitsfahrzeugs 10 möglichst genau ausgeglichen werden. Das Übersetzungsverhältnis des Vortriebsgetriebes 86 wird demnach rechtzeitig erhöht, um das Arbeitsfahrzeug 10 zu beschleunigen, wenn die von der Last 14 abgenommene Leistung ansteigt und analog wird das Übersetzungsverhältnis des Vortriebsgetriebes 86 rechtzeitig verkleinert, um das Arbeitsfahrzeug 10 zu verzögern, wenn die von der Last 14 abgenommene Leistung absinkt. Somit bleibt die Vortriebsgeschwindigkeit des Arbeitsfahrzeugs 10 über die Zeit konstant, trotz der zyklischen Änderungen in der durch die Last abgenommenen Leistung.

Das Kompensieren und Konstanthalten der Vortriebsgeschwindigkeitsänderung des Arbeitsfahrzeugs 10 erfolgt gemäß der vorliegenden Erfindung somit nicht durch eine auf Messung der aktuellen Geschwindigkeit beruhenden Regelschleife (wie sie an sich beispielsweise aus der EP 1 350 658 A1 bekannt ist), welche die Übersetzung des Vortriebsgetriebes 86 verstellt, um bei Lastschwankungen die Vortriebsgeschwindigkeit des Arbeitsfahrzeugs 10 konstant zu halten. Eine derartige Regelschleife könnte dynamische Wechselwirkungen mit einer Regelschleife zur Konstanthaltung der Drehzahl des Antriebsmotors 80 hervorrufen und ihre Stabilität wäre schwierig herstellbar. Anstelle dieser geschlossenen Regelschleife wird eine offene Regelschleife verwendet mit der erwarteten Leistungsabnahme der Last 14 oder einem davon abhängigen Signal als Eingangsgröße, um die durch die sich ändernden Leistungsabnahme resultierenden Geschwindigkeitsänderungen vorausschauend zu kompensieren. Die Steuerung 94 kann die Motorsteuerung 102 derart kommandieren, dass sie die Drehzahl des Antriebsmotors 80 mittels einer auf der erfassten Drehzahl basierenden Regelschleife konstant hält (d.h. keine vorausschauende Kompensation der Motordrehzahl mittels offener Schleife zur Belastungserfassung vornehmen, wie sie in EP 2 183 955 A1 vorgesehen ist) oder analog zur EP 2 183 955 A1 eine vorausschauende, zumindest teilweise lastkompensierende Regelung der Drehzahl des Antriebsmotors 80 mit offener Regelschleife vornehmen.

Es folgt der Schritt S306, in dem abgefragt wird, ob eine Änderung der äußeren Bedingungen stattgefunden hat, wie eine Änderung der Dichte des Schwads 54 oder dessen Feuchtigkeit. Diese Änderung kann daran erkannt werden, dass die Regelung des Schritts S304 nicht mehr optimal funktioniert, was durch einen geeigneten Trägheitssensor 120 des Arbeitsfahrzeugs 10 erfasst werden kann. Haben sich die Bedingungen nicht geändert, folgt wieder der Schritt S304 und sonst der Schritt S302. Die automatische Regelung des Schritts 304 kann durch eine Bedienereingabe abgebrochen werden, z.B. durch manuelle Geschwindigkeitseingabe mittels der Eingabeeinrichtung 32.

Im Schritt S302 können gemäß einer möglichen Ausführungsform für den Beobachtungszeitraum t die mittlere Drehzahl des Antriebsmotors 80 $n_{Engine\_Mean}$ und die mittlere Vortriebsgeschwindigkeit $v_{Mean}$ berechnet werden. Vom Drehmoment und Drehzahlsignal werden dann jeweils die Mittelwerte abgezogen und es wird ein Randbereich-Glättungsfilter, z.B. ein so genanntes Hamming Window angewandt. Die so vorverarbeiteten Lastdaten werden anschließend in den Frequenzbereich transformiert, z.B. mit einer sinnvoll begrenzten Fourierreihen-Entwicklung. Da die Periodizität der abgenommenen Lasten in erster Linie von der Zapfwelle 18 abhängt, wird für die Transformation in den Frequenzbereich vorzugsweise der z.B. mittels eines Winkelsensors 130 (der nur Winkeländerungen, aber nicht absolute Winkel messen muss und beispielsweise an ihm vorbeilaufende Zähne zählen kann) erfasste Zapfwellenwinkel $\theta_{PTO}$ oder eine dazu proportionale Größe (z.B. Kurbelwellenwinkel, der von der Motorsteuerung 102 an die Steuerung 94 übermittelt werden kann) gewählt. Es entsteht eine periodische Funktion $nP_{PTO}(\theta_{PTO})$, welche die lastinduzierte Änderung der Drehzahl der Zapfwelle 18 abhängig von deren Drehwinkel beschreibt. Die zugehörige periodische Änderung der Motordrehzahl ergibt sich dann durch Division mit der Übersetzung $i_{PTO}$ des Zapfwellengetriebes 92:

$$nPEngine(\theta_{PTO}) = nP_{PTO}(\theta_{PTO}) / i_{PTO}$$

$$i_{PTO} = n_{PTO\_OutMean} / n_{EngineMean}$$

Die momentane Drehzahl des Antriebsmotors 80 als Funktion des Zapfwellenwinkels ist ungefähr:

$$nEngine(\theta_{PTO}) = n_{Engine\_Mean} + nPEngine(\theta_{PTO})$$

Die mittlere Übersetzung $i_{Mean}$ des Vortriebs-Antriebsstrangs sei definiert wie folgt:

$$i_{Mean} = v_{Mean} / n_{Engine\_Mean}$$

Dann gilt für die momentane Fahrgeschwindigkeit:

$$V(\theta_{PTO}) = i_{Mean} * nEngine(\theta_{PTO}) = i_{Mean} * (n_{Engine\_Mean} + nP_{PTO}(\theta_{PTO}) / i_{PTO})$$

Es wird verlangt, dass die Fahrgeschwindigkeit konstant und gleich dem Mittelwert sein soll. Um das zu erreichen, soll der Übersetzung des Fahrantriebs eine periodische Funktion des Zapfwellenwinkels überlagert werden. Dann erhält man:

$$v_{Mean} = (i_{Mean} + iP(\theta_{PTO})) * (n_{Engine\_Mean} + nP_{PTO}(\theta_{PTO}) / i_{PTO})$$

Durch Auflösen erhält man die gesucht periodische Funktion der Änderung der Übersetzung, die im Schritt S304 der von der Fahrstrategie berechneten, mittleren Übersetzung überlagert werden soll:

$$iP(\theta_{PTO}) = v_{Mean} / (n_{Engine\_Mean} + nP_{PTO}(\theta_{PTO}) / i_{PTO}) - i_{Mean}.$$

Alternativ oder zusätzlich zu einer Messung der abgenommenen Leistung der Last besteht die Möglichkeit, ein bekanntes mechanisches Übersetzungsverhältnis im Last-Antriebsstrang zur Bestimmung der Periodendauer der Funktion $nP_{PTO}(\theta_{PTO})$ zu nutzen, das für eine gegebene Zapfwellen- oder Motordrehzahl bekannt ist. Bei dieser Ausführungsform wird die Information hinsichtlich des Übersetzungsverhältnisses des Getriebes 74 von der Kontrolleinheit 98 der Last 14 an das Arbeitsfahrzeug 10 (z.B. über eine bidirektionale Busleitung) kommuniziert und zur Bestimmung der periodischen Funktion $nP_{PTO}(\theta_{PTO})$ miteinbezogen.

In einer weiteren, vorteilhaften Ausführungsform ist die Steuerung 94 programmiert, basierend auf einem oder mehreren Sensorsignalen, welche den die von der Last abgenommene Leistung induzierenden Prozess beschreibend, zwischen verschiedenen Amplituden der periodischen Funktion $nP_{PTO}(\theta_{PTO})$ zu unterscheiden und das Übersetzungsverhältnis $iP(\theta_{PTO})$ entsprechend anzupassen.

Hierzu sei wiederum auf das Beispiel der Rechteckballenpresse 16 als Last 14 verwiesen. Wie oben erwähnt, gibt es Arbeitsschritte des Stopfers 20, bei denen noch Erntegut im Zufuhrkanal 46 gesammelt, aber noch nicht durch die Ladegabel 52 in den Pressraum 38 geleitet wird. Bei anderen Arbeitsschritten des Stopfers 20 wurde hingegen soeben neues Erntegut dem Pressraum 38 zugeführt wird und der Stopfer 20 verdichtet anschließend dieses Material gegen den bestehenden Ballenteil 62. Die in den Arbeitsschritten des Stopfers 20 ohne neue Erntegutzufuhr erzeugte Drehmomentspitze an der Zapfwelle 18 unterscheidet sich folglich wesentlich von jener im Arbeitsschritt des Stopfers 20 ohne neue Ernteguzufuhr. Somit ist eine Unterscheidung dieser Amplituden (z.B. über eine an sich bekannte Messung der Bewegungstrajektorie der Ladegabel 52 oder deren Ansteuerung über die Kontrolleinheit 98) vorteilhaft.

Weiterhin kann die Steuerung 94 relevante Kenngrößen des Betriebs der Last 14 überwachen und zur daraus abgeleiteten automatisch oder manuell durch den Bediener bestätigten Neuberechnung der Funktion $nP_{PTO}(\theta_{PTO})$ nutzen (vgl. Schritt S306 der Figur 3). Auch für die Erörterung dieser Funktionalität kann das Beispiel der Rechteckballenpresse 16 herangezogen werden. So hat beispielsweise das Schwungrad 72 einen Freilauf, der dafür vorgesehen ist, die Antriebseinrichtung 70 und den Stopfer 20 nach einem Abschalten der Zapfwelle 18 auslaufen zu lassen. Wird durch den Bediener des Arbeitsfahrzeugs 10 die Drehzahl des Antriebsmotors 80 und somit auch die Drehzahl der Zapfwelle 18 rapide abgesenkt, kann dieser Freilauf dazu führen, dass die Kopplung zwischen Zapfwellenwinkel und Lastzyklus verändert wird. Die Steuerung 94 kann diesen Abfall der Zapfwellendrehzahl 18 erkennen und die Kompensation deaktivieren, bis eine Neuberechnung (Schritt S302 der Figur 3) durchgeführt wurde. Auch Sensorsignale der Last oder Bedienereingaben können zur Erkennung einer notwendigen Neuberechnung (Schritt S302 der Figur 3) hinzugezogen werden. Ändert der Bediener beispielsweise eine mit der Maschinenauslastung des Anbaugeräts korrelierende Einstellung oder ändert sich ein sensorisch erfasster Betriebsparameter des Anbaugeräts (z.B. Feuchte des von der Rechteckballenpresse 16 aufgenommenen Ernteguts), kann ebenfalls eine Neuberechnung (Schritt S302 der Figur 3) gestartet werden.

Bei einer anderen Ausführungsform werden Sensoren zur Bestimmung von Längsbeschleunigungen und/oder Nickbewegungen (z.B. der Beschleunigungssensor 120 oder Gyroskope) verwendet, um die periodischen Nickbewegungen und/oder Geschwindigkeitsänderungen des Arbeitsfahrzeugs 10 zu erfassen. Dies ist insbesondere vorteilhaft, wenn die durch das Arbeitsfahrzeug 10 für die Last (z.B. mechanisch) bereitzustellende Leistung nicht direkt erfasst werden kann. Die Steuerung 94 kann bei dieser Ausführungsform aus den erfassten Nickbewegungen und/oder Geschwindigkeitsänderungen des Arbeitsfahrzeugs 10 darauf schließen, welche Geschwindigkeitsänderungen mittels des Aktors 100 zur Kompensation erforderlich sind, wozu auf abgespeicherte Daten zurückgegriffen werden kann. Es kann auch eine selbstlernende Vorgehensweise angewandt werden, bei der die Steuerung 94 unterschiedliche Geschwindigkeitsänderungen ausprobiert, anhand des Beschleunigungssensors 120 erfasst und bewertet und die effektivste davon schließlich anwendet.

Die vorhergehenden Ausführungen beziehen sich auf eine Rechteckballenpresse 16, deren sich hin- und herbewegender Stopfer 20 eine zeitlich variable Last auf den Antriebsmotor 80 ausüben, deren Auswirkung auf die Vortriebsgeschwindigkeit des die Rechteckballenpresse 16 ziehenden und antrebenden Arbeitsfahrzeugs 10 selbsttätig kompensiert werden durch Variation des Übersetzungsverhältnisses des Vortriebsgetriebes 86. Die variable, durch die Last 14 abgenommene Leistung kann gemessen und/oder anhand von Betriebsparametern der Last 14 ermittelt werden. Eine derartige Vorgehensweise ist auch bei anderen, von einem Ackerschlepper gezogenen oder selbstfahrenden Erntemaschinen möglich, wie Feldhäckslern oder Ballenpressen. Die abgenommene Leistung der Last 14 wird dort nicht durch den Stopfer 20, sondern durch Erntegutbearbeitungselemente (wie Häckseltrommeln oder Dresch- und Trenneinrichtungen) vorgegeben und hängt vom Erntegutdurchsatz ab, der ebenfalls zeitlich variieren kann. Er kann in an sich bekannter Weise vorausschauend erfasst und zur Kompensation der zu erwartenden Änderung der Belastung des Antriebsmotors und der daraus zu erwartenden Vortriebsgeschwindigkeitsänderung dienen.

**Patentansprüche**

1. Antriebssystem eines Arbeitsfahrzeugs (10), mit:

   einem Antriebsmotor (80),
   einem vom Antriebsmotor (80) antreibbaren Last-Antriebsstrang zum Antrieb einer Last (14) mit einer zeitlich variablen, zu einer Drehzahländerung des Antriebsmotors (80) führenden Leistungsabnahme,
   einem vom Antriebsmotor (80) antreibbaren Vortriebs-Antriebsstrang zum Antrieb von Vortriebsmitteln des Arbeitsfahrzeugs (10), der eine mittels eines Aktors (100) veränderbare Übersetzung aufweist,
   und einer Steuerung (94), die mit dem Aktor (100) verbunden, mit einem Signal hinsichtlich der Leistungsaufnahme der Last (14) beaufschlagbar und betreibbar ist, eine von dem Signal abhängige Stellgröße zu erzeugen, **dadurch gekennzeichnet, dass** die Steuerung (94) betreibbar ist, aus dem Signal auf eine erwartete Leistungsaufnahme der Last (14) zu schließen, anhand der erwarteten Leistungsaufnahme der Last (14) eine erwartete Drehzahländerung des Antriebsmotors (80) und eine Auswirkung der Drehzahländerung des Antriebsmotors (80) auf die Vortriebsgeschwindigkeit des Arbeitsfahrzeugs (10) zu berechnen und die erwartete Änderung der Vortriebsgeschwindigkeit des Arbeitsfahrzeugs (10) durch Anpassen der Stellgröße des Aktors (100) derart zu kompensieren, dass die Vortriebsgeschwindigkeit des Arbeitsfahrzeugs (10) auch bei einer Änderung der Leistungsaufnahme der Last (14) zumindest näherungsweise konstant bleibt und/oder eine durch eine Änderung der Leistungsaufnahme der Last (14) bedingte Nickbewegung des Arbeitsfahrzeugs (10) minimiert wird.

2. Antriebssystem nach Anspruch 1, wobei die Steuerung (94) betreibbar ist, das Signal hinsichtlich der Leistungsabnahme der Last (14) anhand von Betriebsdaten des Antriebsmotors (80) zu berechnen und/oder mit einem Sensor (118) zur Erfassung der im Last-Antriebsstrang abgenommenen Leistung und/oder mit einer Kontrolleinheit (98) der Last (14) und/oder einem Sensor (120) zur Erfassung einer durch die Leistungsabnahme der Last beeinflussten Größe verbunden ist.

3. Antriebssystem nach einem der vorhergehenden Ansprüche, wobei die Steuerung (94) betreibbar ist, das Signal über eine Zeitspanne zu erfassen und anhand dessen zeitlichen Verlaufs auf die zukünftige Leistungsaufnahme der Last (14) zu schließen.

4. Antriebssystem nach einem der vorhergehenden Ansprüche, wobei die Steuerung (94) programmiert ist, die Stellgröße derart zu erzeugen, dass ein basierend auf Beschleunigungs- und Drehratenmessungen berechneter Komfortfaktor, der den Komfort des Bedieners der Arbeitsmaschine an seinem Arbeitsplatz beeinflussende Größen einschließlich der Beschleunigung nach vorn und hinten und der Drehrate um die Nickachse repräsentiert, optimiert wird.

5. Arbeitsfahrzeug (10) mit einer Last (14) und einem Antriebssystem nach einem der vorhergehenden Ansprüche.

6. Arbeitsfahrzeug nach Anspruch 5, wobei das Arbeitsfahrzeug (10) ein Ackerschlepper und die Last eine Rechteckballenpresse (16) mit einem durch den Last-Antriebsstrang angetriebenen Stopfer (20) ist.

## Claims

1. Drive system of a working vehicle (10), having:

   a drive motor (80),
   a load drive train driveable by the drive motor (80) for driving a load (14) with a decrease in power which is variable over time and leads to a change in the rotational speed of the drive motor (80),
   a propulsion drive train which is driveable by the drive motor (80) for driving propulsion means of the working vehicle (10), said propulsion drive train having a transmission ratio which can be changed by means of an actuator (100),
   and a controller (94) which is connected to the actuator (100) and can be acted upon and operated with a signal in respect of the power consumption of the load (14) so as to produce an actuating variable which is dependent on the signal,
   **characterized in that** the controller (94) can be operated so as to draw a conclusion from the signal regarding an anticipated power consumption of the load (14), so as to calculate, on the basis of the anticipated power consumption of the load (14), an anticipated change in the rotational speed of the drive motor (80) and an effect of the change in the rotational speed of the drive motor (80) on the propulsion speed of the working vehicle (10), and so as to compensate for the anticipated change in the propulsion speed of the working vehicle (10) by adapting the actuating variable of the actuator (100) in such a manner that, even when the power consumption of the load (14) changes, the propulsion speed of the working vehicle (10) remains at least virtually constant and/or a pitching movement of the working vehicle (10) caused by a change in the power consumption of the load (14) is minimized.

2. Drive system according to Claim 1, wherein the controller (94) can be operated so as to calculate the signal in respect of the decrease in power of the load (14) on the basis of operating data of the drive motor (80), and/or is connected to a sensor (118) for detecting the power taken off in the load drive train and/or is connected to a monitoring unit (98) of the load (14) and/or to a sensor (120) for detecting a variable influenced by the decrease in power of the load.

3. Drive system according to either of the preceding claims, wherein the controller (94) can be operated so as to detect the signal for a period of time and, on the basis of the temporal progression of said signal, so as to draw a conclusion regarding the future power consumption of the load (14).

**4.** Drive system according to one of the preceding claims, wherein the controller (94) is programmed to generate the actuating variable in such a manner that a comfort factor which is calculated on the basis of measurements of acceleration and rate of rotation and which represents variables influencing the comfort of the operator of the working machine at the operator's work station, including the acceleration forwards and backwards and the rate of rotation about the pitching axis, is optimized.

**5.** Working vehicle (10) having a load (14) and a drive system according to one of the preceding claims.

**6.** Working vehicle according to Claim 5, wherein the working vehicle (10) is a tractor and the load is a rectangular baler (16) having a plunger (20) which is driven by the load drive train.

**Revendications**

**1.** Système d'entraînement d'un véhicule de travail (10), comprenant :

un moteur d'entraînement (80),
un groupe motopropulseur de charge pouvant être entraîné par le moteur d'entraînement (80), pour entraîner une charge (14) avec une diminution de puissance variable dans le temps conduisant à une variation de régime du moteur d'entraînement (80), un groupe motopropulseur de propulsion pouvant être entraîné par le moteur d'entraînement (80), pour entraîner des moyens de propulsion du véhicule de travail (10), qui présente une démultiplication pouvant être variée au moyen d'un actionneur (100),
et une commande (94) qui est connectée à l'actionneur (100) et qui peut être sollicitée et activée avec un signal relatif à la consommation de puissance de la charge (14), pour générer une grandeur de réglage dépendant du signal,
**caractérisé en ce que** la commande (94) peut être activée pour déduire une consommation de puissance attendue de la charge (14) à partir du signal, pour calculer, à l'aide de la consommation de puissance attendue de la charge (14), une variation attendue de régime du moteur d'entraînement (80) et une action de la variation de régime du moteur d'entraînement (80) sur la vitesse de propulsion du véhicule de travail (10), et pour compenser la variation attendue de la vitesse de propulsion du véhicule de travail (10) par adaptation de la grandeur de réglage de l'actionneur (100) de telle sorte que la vitesse de propulsion du véhicule de travail (10) reste au moins approximativement constante même en cas de variation de la consommation de puissance de la charge (14) et/ou qu'un mouvement de tangage du véhicule de travail (10) provoqué par une variation de la consommation de puissance de la charge (14) soit minimisé.

**2.** Système d'entraînement selon la revendication 1, dans lequel la commande (94) peut être activée de manière à calculer le signal relatif à la diminution de puissance de la charge (14) à l'aide de données de fonctionnement du moteur d'entraînement (80) et/ou est connectée à un capteur (118) pour détecter la puissance réduite dans le groupe motopropulseur de charge et/ou est connectée à une unité de contrôle (98) de la charge (14) et/ou à un capteur (120) pour détecter une grandeur influencée par la diminution de puissance de la charge.

**3.** Système d'entraînement selon l'une quelconque des revendications précédentes, dans lequel la commande (94) peut être activée pour détecter le signal pendant un intervalle de temps et pour déduire, à partir de son allure dans le temps, la consommation de puissance future de la charge (14) .

**4.** Système d'entraînement selon l'une quelconque des revendications précédentes, dans lequel la commande (94) est programmée pour générer la grandeur de réglage de manière à optimiser un facteur de confort calculé sur la base de mesures d'accélération et de vitesses de rotation, qui représente des grandeurs influençant le confort de l'utilisateur de la machine de travail à son poste de travail y compris l'accélération vers l'avant et vers l'arrière et la vitesse de rotation autour de l'axe de tangage.

**5.** Véhicule de travail (10) comprenant une charge (14) et un système d'entraînement selon l'une quelconque des revendications précédentes.

**6.** Véhicule de travail selon la revendication 5, le véhicule de travail (10) étant un tracteur agricole et la charge étant une presse à balles rectangulaires (16) avec un pousseur (20) entraîné par le groupe motopropulseur de charge.

Fig. 1

EP 3 298 872 B1

Fig. 2

Start ——— S300

Erfasse Signal hinsichtlich Leistungsaufnahme von 14 über Zeit t ——— S302

Berechne Stellgröße für 100 anhand erwarteter Leistungsaufnahme im Sinne einer konstanten Vortriebsgeschwindigkeit ——— S304

Änderung der Bedingungen? —n→ S304

j ↓ S302

S306

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1609349 A1
- EP 1658765 A1
- EP 2183955 A1
- US 7174831 B2
- EP 1350658 A1